# FASCICULE DE BREVET EUROPEEN

(11) **EP 0 393 308 B1**
(45) Date de publication et mention de la délivrance du brevet: **13.04.1994**
(21) Numéro de dépôt: 90100911.8
(22) Date de dépôt: 17.01.1990
(51) Int. Cl.: B60S 3/04

(54) **Procédé de lavage d'un véhicule et installation pour la mise en oeuvre du procédé**
Fahrzeug-Waschverfahren und Vorrichtung zur Ausführung dieses Verfahrens
Vehicle washing procedure and arrangement for implementing the procedure

(30) Priorité: 19.04.1989 CH 1484/89
(43) Date de publication de la demande: 24.10.1990
(73) Titulaire: SOGICO S.A., CH-2014 Peseux (CH)
(72) Inventeur: Paquette, Maurice, CH-2014 Pesseux (CH)
(74) Mandataire: Leiser, Gottfried, Dipl.-Ing.

(56) Documents cités:
- DE-A- 1 455 516
- DE-A- 1 804 440
- DE-A- 2 932 208
- FR-A- 1 535 072
- FR-A- 2 248 701
- US-A- 3 307 744
- PATENT ABSTRACTS OF JAPAN vol. 10, no. 277 (M-519)(2333) 19 septembre 1986,& JP-A-61 98657 (NIPPON DENSO) 16 mai 1986,

## Description

La présente invention a pour objet un procédé de lavage d'un véhicule; elle se rapporte également à une installation pour la mise en oeuvre du procédé.

La technique de nettoyage des voitures a connu un progrès et une croissance importante ces dernières années, l'innovation la plus importante étant peutêtre celle des systèmes automatiques de lavage de voitures. Ces systèmes automatiques facilitent grandement le nettoyage de l'extérieur des véhicules tout en diminuant les exigences de la main-d'oeuvre. Deux de ces systèmes automatiques qui sont couramment utilisés sont le système "du type box" fonctionnant avec une lance de lavage actionnée manuellement et le système "du type tunnel" qui comprend en général une section transporteuse le long de laquelle sont disposés divers appareils qui gèrent les étapes particulières du lavage et du nettoyage de l'extérieur du véhicule.

Par exemple, dans une première étape des brosses de nettoyage enlèvent la saleté du véhicule, dans une deuxième étape on lave le bas de caisse et les enjoliveurs de roues, et dans une troisième étape on rince le véhicule qui est encore séché ou lustré au moyen d'air et de produits spécifiques.

La qualité de nettoyage dans les systèmes automatiques "du type tunnel" présente certains inconvénients inhérents à la construction de ces installations.

Notamment on a constaté très souvent la tendance à laisser des traces de détergent sous la forme de dépôts ou de voiles inesthétiques. En plus, l'utilisation à la fois de hautes pressions d'aspersion de liquide et de mauvais réglage de brosses entraînent, à la longue, un détérioration des peintures et des problèmes d'inflitration au niveau des joints de portes.

On rappellera encore que les installations à transporteurs "du type tunnel" provoquent souvent des excès de détergent émis par les brosses de lavage et le liquide de rinçage de véhicule qui sont directement envoyés à l'égout. Comme ces détergents contiennent des phosphates et des agents mouillants ou tensioactifs non-biodégradables, ils sont fortement décriés, parce qu'ils sont accusés de contribuer à la pollution des cours d'eau.

Dans une installation de lavage de type connu, se rapportant au brevet CH 574 336, il est question d'un châssis qui porte deux jeux de buses de pulvérisation espacées verticalement et dirigées vers l'intérieur les unes vers les autres, et un troisième jeu de buses de pulvérisation espacées horizontalement, dirigées vers le bas, et qui s'étend entre les deux premiers jeux de buses qui pivotent autour de leurs axes verticaux respectifs tandis que le troisième jeu de buses pivote autour d'un axe horizontal, les trois jeux étant reliés de manière à se déplacer d'une première position, dans laquelle les buses sont toutes dirigées vers l'un des côtés du plan général du châssis, à une seconde position dans laquelle toutes les buses sont dirigées vers l'autre côté dudit plan, des moyens permettant d'approvisioner ces buses en liquide sous pression.

Cette installation tente de créer un lavage manuel au moyen d'un ensemble d'un dispositif coûteux à l'entretien et difficile à régler pour une utilisation rationnelle et efficace.

Dans un autre procédé de lavage connu du document DE-A-1 455 516 qui sert de base pour les préambules des revendications indépendantes, on utilise un adoucisseur d'eau pour fournir une eau adoucie qui est ensuite chauffée et stockée dans une cuve.

Les inconvénients de ce procédé sont importants en particulier par le fait qu'il faut utiliser une solution de saumure pour nettoyer, à contre-courant, les résines de l'adoucisseur, ce qui entraîne une évacuation d'eau chargée de saumure directement dans les égouts.

Il est en outre connu d'utiliser un appareil d'osmose pour fournir de l'eau pure utilisée en particulier lors des opérations finales de rinçage. Toutefois, l'appareil d'osmose rejette une certaine quantité d'eau dure contenant des sels ou des phosphates faisant office d'agent tensio-actif amonique qui provoquent une pollution des eaux industrielles. Le réglage de l'installation étant pratiquement dépourvu de dispositif de contrôle, on assiste souvent à une dérive des caractéristiques se rapportant à une certaine quantité de l'eau (pH - °dH degrés hydrotimétriques - µS conductivité).

La présente invention offre un procédé de lavage d'un véhicule comportant différentes étapes de conditionnement de l'eau et caractérisé en ce que l'on utilise de l'eau préchauffée qui est ensuite injectée, sous faible pression, dans un circuit hydraulique alimentant d'une part une première cuve de stockage A et d'autre part alimentant une conduite dont l'eau est neutralisée pour l'obtention d'un pH constant, et ensuite mise sous moyenne pression de manière à passer au travers d'un séparateur à membrane pourvu de deux sorties dont l'une donne une eau de rejet adoucie qui est ensuite stockée dans une deuxième cuve B, tandis que l'autre sortie donne une eau pure osmosée stockée dans une troisième cuve C, les trois cuves A, B, C approvisionnant une batterie d'électro-vannes commandée par un sélecteur de lavage qui permet d'alimenter une lance mobile.

Par ailleurs, l'invention met à disposition une installation pour la mise en oeuvre du procédé, comportant un circuit hydraulique, des appareils de contrôle et de conditionnement et des cuves A, B, C de stockage et caractérisée en ce que le circuit hydraulique comprend un bac réservoir d'eau comportant un dispositif de chauffage et alimentant une pompe qui remplit une première cuve de stockage A et injecte l'eau dans une conduite gérée par des appareils de contrôle et de dosage, et par un filtre relié à une pompe à étage qui débite le fluide à une pression moyenne dans un séparateur à membrane qui comporte deux sorties raccordées à des conduites pourvues de débimètres qui approvisionnent des deuxième et troisième cuves de stockage B, C servant au lavage d'un véhicule par l'intermédiaire d'une lance, la membrane du séparateur provoquant la séparation des particules en suspension dans le fluide pour l'obtention d'une eau de rejet adoucie remplissant la deuxième cuve de stockage B et d'une eau pure remplissant la troisième cuve de stockage C.

Le procédé et l'installation, objet de la présente invention obvient aux nombreux inconvénients importants mentionnés ci-dessus et présentent des avantages nouveaux et performants résultant des points suivants:
Préchauffage de l'entrée à l'entrée du circuit hydraulique permettant un meilleur rendement de la membrane du séparateur respectivement une plus grande production d'eau pure et adoucie.
Réglage automatique du pH par dosage d'un produit et contrôle secondaire du résultat obtenu.
Suppression de l'adoucisseur respectivement annulation de l'eau de rejet contenant de la saumure dans les égouts.
Formation durable d'un état de brillance de la carrosserie du véhicule traité après le rinçage final, respectivement absence de toutes traces de produits nettoyants.
Très haute précision de la qualité de l'eau de nettoyage et coût de l'opération très faible.
Selon un perfectionnement de l'invention:
- auto-nettoyage de la membrane du séparateur par vibration due à la vitesse d'écoulement de l'eau de rejet;
- calibrage exact des deux composantes se rapportant à l'eau pure et à l'eau adoucie; et
- auto-compensation du volume des cuves contenant l'eau pure et l'eau adoucie par contrôle et réglage des débits des liquides.

La manière dont l'invention peut être réalisée et les avantages qui en découlent, ressortiront mieux des exemples de réalisation qui suivent, donnés à titre indicatif et non limitatif et ceci à l'appui des figures annexées.
- La figure 1: représente un tracé schématique général de l'ensemble du dispositif selon la présente invention.
- La figure 2: représente une vue en coupe partielle du dispositif de lavage placé dans le box recevant le véhicule.

Pour une meilleure compréhension de la description du procédé faisant objet de l'invention, on rappellera les trois principes physiques suivants:
pH (potentiel d'hydrogène) est une mesure du nombre d'ions libres d'hydrogène existants dans une solution, il fournit la force de la basicité (H+) ou de l'acidité (OH-) de cette solution.
(pH 4 = 10. -4 g d'ions par litre).
°dH exprime la dureté de l'eau en degrés hydrotimétrique ou en milliéquivalents et correspond à la teneur globale en ions Ca++ et en Mg ++ (chaux et magnésie).
La dureté peut être carbonatée (bicarbonate-alcalin) ou non carbonatée.

La dureté est génératrice d'inconvénients importants dans les procédés de lavage en raison, soit des réactions chimiques qui peuvent se produire avec les ions de calcium et magnésium au moment de l'utilisation de l'eau, soit en raison des précipitations de sels insolubles de calcium et de magnésium.
µS/cm à T. exprime la conductivité, c'est-à-dire la qualité d'ions présents et leur mobilité à une température donnée.

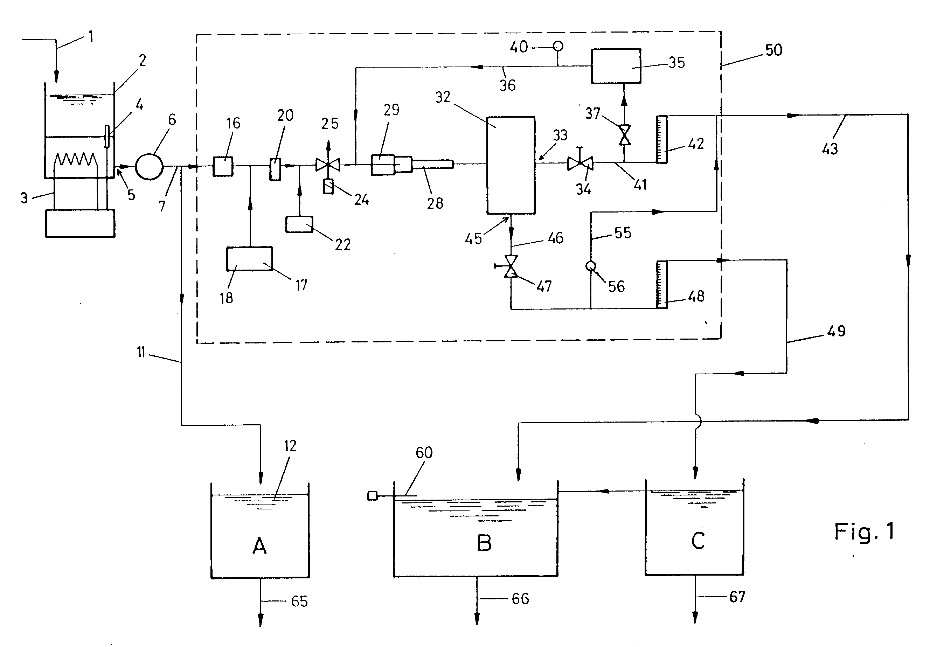

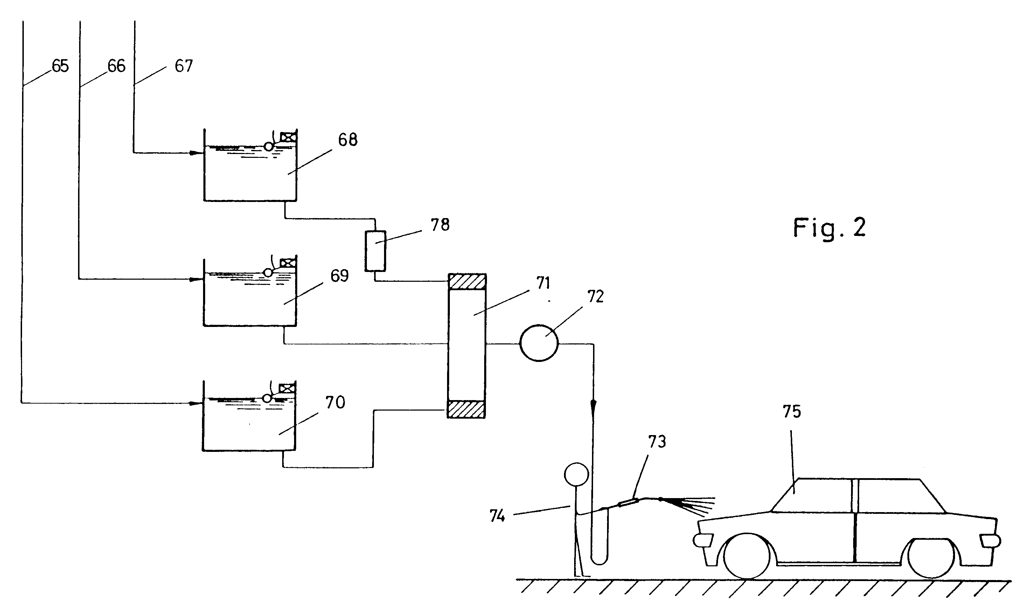

En référence aux figures 1 et 2, le procédé consiste à obtenir une eau pure de haute qualité qui soit en permanence contrôlée et qualibrée par des moyens électriques, ce qui a pour effet une annulation de la pollution en raison de la suppression de l'eau de lavage de l'adoucisseur et en raison de l'utilisation rationnelle de l'eau de rejet adoucie servant à l'opération de lavage.
Le procédé consiste à utiliser de l'eau normale arrivant par la canalisation de distribution 1 qui remplit un bac réservoir 2 agencé de manière à recevoir un dispositif de chauffage 3 et de régulation 4 de la température de l'eau.

Le bac réservoir est muni d'une sortie 5 qui alimente une pompe 6 conventionnelle qui approvisionne la conduite hydraulique 7. Une conduite de dérivation 11 asservie par une électro-vanne 12, alimente une cuve de stockage A contenant de l'eau non-traitée 12 qui sert au rinçage principal effectué après le lavage du véhicule.
Sur la conduite hydraulique 7 est disposé un régulateur de pression 16 en série permettant de maintenir une pression constante sur la conduite 7 qui est encore pourvue d'un appareil de contrôle du pH 17 et d'un doseur 18 qui régularise le pH à une valeur constante par injection calibrée d'un acide.
Pour éliminer les impuretés organiques on a inséré un filtre 20 de 0,5 µm qui supprime la présence de produits en décomposition non rigoureusement définis, des substances végétales et animales et des acides humiques.

Un appareil 22 permet de faire un contrôle final du pH respectivement de voir si le doseur 18 a rempli sa fonction régulatrice au niveau de la qualité du liquide qui sera libéré, en cas de non conformité, par une électro-vanne 24 pourvue d'une sortie 25.
La conduite hydraulique 7 est ensuite reliée à une pompe 28 pourvue d'un moteur électrique 29 entraînant un rotor étagé axial qui permet d'obtenir une pression comprise entre 20 et 40 bar et alimentant un séparateur 32 à membrane qui élimine totalement ou partiellement, par des moyens connus et par conséquent non décrits, la dureté de l'eau.
Le séparateur à membrane 32 comprend une sortie 33 qui est nécessaire à l'écoulement de l'eau de rejet (concentrat) passant au travers d'une vanne de contrôle et de réglage 34 . Une vanne 37 pilotée par un appareil 35 régulateur temporisé , dérive une certaine quantité d'eau de rejet, dans une conduite 36 de dérivation, qui alimente, dans un temps programmé la pompe 28 qui présente dès cet instant, une augmentation de la vitesse d'écoulement du liquide provoquant un phénomène vibratoire régulier de la membrane du séparateur 32 qui se trouve ainsi auto-nettoyée des micro-déchets en suspension accumulés en cours de fonctionnement du séparateur 32.
Sur la conduite 36, on a prévu un manomètre 40 qui est utile pour le contrôle de la pression du liquide allant à la pompe 28.
La conduite 41 assujettie à l'eau de rejet ou adoucie passe en plus par un débimètre 42 de contrôle, dont la sortie alimente, au moyen d'une conduite 43 une cuve de stockage B servant à l'opération de lavage du véhicule.

Le séparateur à membrane 32 présente une autre sortie 45 qui s'apparente à l'écoulement de l'eau pure (perméat) par l'intermédiaire d'une conduite 46 passant au travers d'une vanne de contrôle et de réglage 47 et d'un débimètre 48 qui approvisionne, au moyen d'une conduite 49, une cuve de stockage C servant au rinçage de finition du véhicule. Les conduites 43 et 46 sont reliées entre elles par une conduite 55 qui passe au travers d'un détendeur de sécurité 56 servant à décharger la conduite d'eau pure en cas de surcharge. Les débimètre 42 et 48 peuvent être utilisés pour opérer un équilibrage ou une précision de réglage du paramètre volumétrique des eaux alimentant les cuves B-C. L'ensemble des appareils décrits, dès la conduite hydraulique 7, se trouvent placés dans une armoire 5o pourvue d'un panneau frontal servant à la lecture des instruments et au réglage des appareils.
Comme on peut le voir schématiquement dans la figure 1, la cuve de stockage C ( rinçage de finition ) est communiquante avec la cuve B ( lavage ) de manière à déverser de l'eau pure dans de l'eau adoucie , et ceci pour compenser une plus grande consommation d' eau de lavage par rapport à l'eau de rinçage qui est utilisée pour enlever les produits nettoyants.
La régulation étant réalisée au moyen d'un contrôleur de niveau 60 qui asservit la vanne principale 24 ou les vannes de débit non représentées se trouvant sur les conduites 43 et 49.
En regard de la figure 2, l'installation comprend encore des conduites 65-66-67 qui sont reliées respectivement aux cuves de stockage A-B-C et qui alimentent des bacs réservoir 68-69-70 raccordés à une batterie d'électro-vannes 71 commandée par un sélecteur de lavage non représenté, se trouvant sur le tableau de commande. La batterie d'électro-vannes 71 permettant par l'intermédiaire d'une pompe 72 d'alimenter la lance de lavage 73 qui est manipulée par un opérateur 74 ou directement par le conducteur du véhicule 75 se trouvant dans le box de lavage.
Il va sans dire que l'ensemble de l'installation est commandée respectivement réglée par un dispositif électrique connu et par conséquent non décrit.

Dans une variante d'exécution il est naturellement possible de procéder à un lavage chimique de la membrane du séparateur au moyen d'un produit adéquat qui est introduit périodiquement dans la conduite 36.
Il est également possible d'utiliser un moniteur de contrôle comportant un enregistreur graphique qui gère automatiquement la qualité et la quantité des trois sortes d'eau et ceci sans intervention humaine.

Dans une autre variante d'exécution d'installation conforme à l'invention, on utilisera des dispositifs de régulation calibrés permettant d'obtenir un pourcentage constant et régulier d'eau pure par rapport à l'eau adoucie et ceci en relation avec les différents critères régissant l'ensemble de l'installation de lavage.

Le procédé de lavage peut se faire également sans préchauffage de l'eau au niveau du bac 2, la rentabilité et l'efficacité étant dans ce cas inférieure à une utilisation d'eau préchauffée. Dans certain cas , on utilisera un appareil polarisateur 78 , monté entre la cuve 68 et la batterie d'électro-vannes 71 , et qui supprime les résidus de sels séchants se trouvant encore sur la carrosserie du véhicule.

## Revendications

1. Procédé de lavage d'un véhicule comportant différentes étapes de conditionnement de l'eau, caractérisé en ce que l'on utilise de l'eau préchauffée qui est ensuite injectée, sous faible pression, dans un circuit hydraulique alimentant d'une part une première cuve de stockage (A) et d'autre part alimentant une conduite dont l'eau est neutralisée pour l'obtention d'un pH constant, et ensuite mise sous moyenne pression de manière à passer au travers d'un séparateur à membrane (32) pourvu de deux sorties dont l'une (33) donne une eau de rejet adoucie qui est ensuite stockée dans une deuxième cuve (B), tandis que l'autre sortie (45) donne une eau pure osmosée stockée dans une troisième cuve (C), les trois cuves (A, B, C) approvisionnant une batterie d'électro-vannes (71) commandée par un sélecteur de lavage qui permet d'alimenter une lance mobile.

2. Procédé de lavage selon la revendication 1, caractérisé en ce que la sortie (33) du séparateur (32) qui donne une eau de rejet adoucie alimente une conduite (36) qui est commandée par un appareil (35) régulateur temporisé qui injecte régulièrement de l'eau dans une pompe (28) provoquant une augmentation de la vitesse du fluide, respectivement une vibration autonettoyante agissant sur une membrane du séparateur (32).

3. Procédé de lavage selon la revendication 1 caractérisé en ce que l'eau est neutralisée au moyen d'un acide qui est introduit dans la conduite (7) par l'intermédiaire d'un doseur (18) commandé par un appareil (17) de contrôle du pH, le fluide étant ensuite filtré par un appareil (20) et recontrôlé définitivement au moyen d'un appareil (22) qui ouvre l'électro-vanne (24) si la valeur du pH est hors norme.

4. Procédé de lavage selon la revendication 1, caractérisé en ce que l'eau pure sortant du séparateur (32) est calibrée proportionnellement à l'eau de rejet au moyen de débimètres (42 et 48).

5. Procédé de lavage selon la revendication 4, caractérisé en ce que le calibrage est réalisé par des jauges mécaniques étalonnées définitivement.

6. Installation pour la mise en oeuvre du procédé selon l'une des revendications 1 à 5 comprenant un circuit hydraulique, des appareils de contrôle (22) et de conditionnement (24) et des cuves (A, B, C) de stockage, caractérisée en ce que le circuit hydraulique comprend un bac (2) réservoir d'eau comportant un dispositif de chauffage 3 et alimentant une pompe (6) qui remplit une première cuve de stockage (A ) et injecte l'eau dans une conduite gérée par des appareils de contrôle (22) et de dosage (24), et par un filtre (20) relié à une pompe à étage (28) qui débite le fluide à une pression moyenne dans un séparateur (32) à membrane qui comporte deux sorties (33, 45) raccordées à des conduites (41, 46), pourvues de débimètres (42, 48) qui approvisionnent des deuxième et troisième cuves de stockage (B, C) servant au lavage d'un véhicule par l'intermédiaire d'une lance (73), la membrane du séparateur (32) provoquant la séparation des particules en suspension dans le fluide pour l'obtention d'une eau de rejet adoucie remplissant la deuxième cuve de stockage (B) et d'une eau pure remplissant la troisième cuve de stockage (C).

7. Installation selon la revendication 6, caractérisée en ce que les débimètres (42-48) permettent de donner des informations pour le remplissage des deuxième et troisième cuves (B, C) et le réglage du pourcentage d'eau pure par rapport à l'eau de rejet.

## Claims

1. A method of washing a vehicle, comprising various water treatment steps,
**characterised in that** preheated water is used, which is then injected, at low pressure, into a hydraulic circuit feeding on the one hand a first storage tank (A) and on the other hand feeding a conduit, the water of which is neutralised to obtain a constant pH, and then subject to medium pressure so as to pass through a membrane separator (32) provided with two outlets, one (33) of which gives a softened discharge water which is then stored in a second tank (B), while the other outlet (45) gives a pure water which has been diffused by osmosis and is stored in a third tank (C), the three tanks (A, B, C) supplying an assembly of electric valves (71) which is controlled by a washing selector which permits a displaceable nozzle to be supplied.

2. A washing method according to Claim 1,
**characterised in that** the outlet (33) of the separator (32) which gives a softened discharge water, feeds a conduit (36) which is controlled by a timed regulating apparatus (35) which regularly injects water into a pump (28) causing the rate of flow of the fluid to increase, or respectively a self-cleaning vibration acting upon a membrane of the separator (32).

3. A washing method according to Claim 1,
**characterised in that** the water is neutralized by means of an acid which is introduced into the conduit (7) via a metering means (18) controlled by a pH controlling apparatus (17), the fluid then being filtered by an apparatus (20) and definitively recontrolled by means of an apparatus (22) which opens the electric valve (24) if the pH value is abnormal.

4. A washing method according to Claim 1,
**characterised in that** the pure water leaving the separator (32) is calibrated in proportion to the discharge water by means of flow meters (42 and 48).

5. A washing method according to Claim 4,
**characterised in that** the measurement is effected by means of definitively standardized mechanical gauges.

6. An installation for using the method according to one of Claims 1 to 5 comprising a hydraulic circuit, controlling (22) and treatment (24) devices and storage tanks (A,B, C),
**characterised in that** the hydraulic circuit comprises a water storage tank (2) comprising a heating device 3 and supplying a pump (6) which fills a first storage tank (A) and injects the water into a conduit governed by controlling (22) and metering appliances, and by a filter (20) connected to a stage pump (28) which discharges the fluid at medium pressure into a membrane separator (32) which comprises two outlets (33, 45) connected to conduits (41, 46) provided with flow meters (42, 48), which supply second and third storage tanks (B, C) used to wash a vehicle by means of a nozzle (73), the membrane of the separator (32) causing the separation of the particles suspended in the fluid to obtain a softened discharge water filling the second storage tank (B) and pure water filling the third storage tank (C).

7. A washing method according to Claim 6,
**characterised in that** the flow meters (42 - 48) enable the provision of information for filling the second and third tanks (B, C) and the regulation of the percentage of the pure water relative to the discharge water.

## Patentansprüche

1. Verfahren zum Waschen eines Fahrzeugs mit verschiedenen Wasseraufbereitungsstufen, dadurch gekennzeichnet, daß vorgewärmtes Wasser verwendet wild, das dann unter schwachem Druck in einen Hydraulikkreis eingespeist wird, der einerseits einen ersten Lagertank (A) speist und andererseits eine Leitung, deren Wasser zur Erlangung eines konstanten pH neutralisiert ist, und dann so unter mittleren Druck gesetzt wird, daß es einen Membranabscheider (32) durchlaufen kann, der mit zwei Ausgängen versehen ist, von denen einer (33) enthärtetes Abwasser abgibt, das dann in einem zweiten Tank (B) gelagert wird, wohingegen der andere Ausgang (45) reines osmotiertes, in einem dritten Tank (C) gelagertes Wasser abgibt, wobei die drei Tanks (A, B, C) eine Batterie von Magnetventilen (71) versorgen, die von einem Waschselektor gesteuert werden, der es ermöglicht, eine bewegliche Wasserlanze zu speisen.

2. Waschverfahren nach Anspruch 1, dadurch gekennzeichnet, daß der Ausgang des Abscheiders (32), der enthärtetes Abwasser abgibt, eine Leitung (36) speist, welche von einem Zeiteinstellungs-Regelgerät (35) gesteuert wird, das regelmäßig Wasser in eine Pumpe (28) einspeist und eine Erhöhung der Geschwindigkeit der Flüssigkeit bzw. eine selbstreinigende Vibration herbeiführt, die auf eine Membran des Abscheiders (32) einwirkt.

3. Waschverfahren nach Anspruch 1, dadurch gekennzeichnet, daß das Wasser mittels einer Säure neutralisiert wird, die über einen von einem pH-Regelgerät (17) gesteuerten Dosierapparat (18) in die Leitung (7) eingespeist wird, wobei die Flüssigkeit anschließend durch ein Gerät (20) gefiltert und endgültig mittels einer Vorrichtung (22) nachkontrolliert wird, welche das Magnetventil (24) öffnet, wenn der pH-Wert außerhalb der Norm liegt.

4. Waschverfahren nach Anspruch 1, dadurch gekennzeichnet, daß das aus dem Abscheider (32) austretende Reinwasser mittels Durchflußmengenmeßgeräten (42 und 48) proportional zum Abwasser kalibriert wird.

5. Waschverfahren nach Anspruch 4, dadurch gekennzeichnet, daß die Kalibrierung durch definitiv geeichte mechanische Lehren erfolgt.

6. Anlage zur Anwendung des Verfahrens nach einem der Ansprüche 1 bis 5, bestehend aus einem Hydraulikkreis, Prüf- (22) und Aufbereitungsvorrichtungen (24) und Lagertanks (A, B, C), dadurch gekennzeichnet, daß der Hydraulikkreis einen Wasserbehälter (2) beinhaltet, welcher eine Heizeinrichtung (3) aufweist und eine Pumpe (6) speist, die einen ersten Lagertank (A) auffüllt und das Wasser in eine Leitung einspeist, welche von Kontroll- (22) und Dosiervorrichtungen (24) und von einem Filter (20) überwacht wird, der mit einer Stufenpumpe (28) verbunden ist, welche die Flüssigkeit unter mittlerem Druck einem Membranabscheider (32) mit zwei Ausgängen (33, 45) zuführt, die mit Leitungen (41, 46) verbunden sind, die mit Durchflußmengenmeßgeräten (42, 48) versehen sind, welche den zweiten und den dritten Lagertank (B, C) zum Waschen eines Fahrzeugs über eine Lanze (73) beschicken, wobei die Membran des Abscheiders (32) die Abscheidung der Schwebeteilchen in der Flüssigkeit bewirkt, um enthärtetes Abwasser zum Füllen des zweiten Lagertanks (B) und Reinwasser zum Füllen des dritten Lagertanks (C) zu erhalten.

7. Anlage nach Anspruch 6, dadurch gekennzeichnet, daß die Durchflußmengenmeßgeräte (42-48) die Ausgabe von Informationen zum Füllen des zweiten und des dritten Tanks (B, C) und zur Regelung des Reinwasserprozentsatzes im Verhältnis zum Abwasser ermöglichen.
